# EUROPÄISCHE PATENTSCHRIFT

(11) **EP 3 771 666 B1**
(45) Veröffentlichungstag und Bekanntmachung des Hinweises auf die Patenterteilung: **01.03.2023**
(21) Anmeldenummer: 20183751.5
(22) Anmeldetag: 02.07.2020
(51) Int. Cl.: B65G 57/03, B65B 5/10, B65B 13/06, B65B 13/32, B65B 43/58, B65B 39/00, B65B 61/28

(54) **VORRICHTUNG UND VERFAHREN ZUM KOMMISSIONIEREN**
PICKING DEVICE AND METHOD
DISPOSITIF ET PROCÉDÉ DE PRÉPARATION DES COMMANDES

(30) Priorität: 29.07.2019 DE 102019211244
(43) Veröffentlichungstag der Anmeldung: 03.02.2021
(73) Patentinhaber: Winkel GmbH, 75428 Illingen (DE)
(72) Erfinder: Loupas, Athanasios, 75417 Mühlacker (DE); Weisser, Alexander, 75180 Pforzheim (DE)
(74) Vertreter: Patentanwälte Ruff, Wilhelm, Beier, Dauster & Partner mbB

(56) Entgegenhaltungen:
- DE-A1-102012 022 454
- DE-A1-102012 106 112
- DE-U1-202005 015 887
- US-A1- 2005 217 215

## Beschreibung

Die Erfindung betrifft eine Vorrichtung zum Kommissionieren auf Warenträgern, insbesondere Paletten, mit einem Kommissionierschacht, einer Zuführeinrichtung zum Zuführen eines nicht beladenen Warenträgers und einer Absenkeinrichtung zum schrittweisen Absenken des Warenträgers in Abstimmung mit einer Beladehöhe des Warenträgers. Die Erfindung betrifft auch ein Verfahren zum Kommissionieren auf Warenträgern, insbesondere Paletten, mit den Schritten Zuführen eines Warenträgers zu einem Kommissionierplatz, schrittweises Absenken des Warenträgers während des Kommissionierens in Abstimmung mit einer Beladehöhe des Warenträgers und Abführen des vollständig beladenen Warenträgers.

Aus der deutschen Offenlegungsschrift DE 10 2012 022 454 A1 ist eine Vorrichtung gemäß dem Oberbegriff des Anspruchs 1 zum Kommissionieren auf Paletten bekannt, die einen Kommissionierschacht, eine Zuführeinrichtung zum Zuführen einer nicht beladenen Palette und eine Absenkeinrichtung zum schrittweisen Absenken der Palette in Abstimmung mit einer Beladehöhe der Palette aufweist. Die Vorrichtung weist weiter eine Umreifungsvorrichtung auf, mit der eine Ladegutschicht aus Ladegut auf der Palette während des Kommissionierens einer anderen Ladegutschicht umreift werden kann.

Aus der US-Offenlegungsschrift US 2005/0217215 A1 ist eine weitere Vorrichtung zum Kommissionieren auf Paletten mit einer Umreifungsvorrichtung bekannt. Die Umreifungsvorrichtung weist einen Rahmen auf, der den Kommissionierschacht umgibt. Wenn eine Ladegutschicht fertiggestellt ist, kann die Ladegutschicht mit dem Umreifer umreift werden. Aus der deutschen Offenlegungsschrift DE 10 2012 106 112 A1 ist eine Vorrichtung zum Kommissionieren auf Paletten bekannt, die eine Einrichtung zum Umwickeln einer fertiggestellten Ladegutschicht mit Folie aufweist.

Aus der deutschen Gebrauchsmusterschrift DE 20 2005 015 887 U1 ist eine weitere Vorrichtung zum Kommissionieren auf Paletten bekannt, die eine Vorrichtung zum Umwickeln von Ladegut auf einer Palette mit Folie aufweist.

Mit der Erfindung sollen eine Vorrichtung und ein Verfahren zum Kommissionieren verbessert werden.

Erfindungsgemäß ist hierzu eine Vorrichtung zum Kommissionieren mit den Merkmalen von Anspruch 1 und ein Verfahren zum Kommissionieren mit den Merkmalen von Anspruch 5 vorgesehen. Vorteilhafte Weiterbildungen der Erfindung sind in den Unteransprüchen angegeben.

Erfindungsgemäß ist eine Vorrichtung zum Kommissionieren auf Warenträgern, insbesondere Paletten, mit einem Kommissionierschacht, eine Zuführeinrichtung zum Zuführen eines nicht beladenen Warenträgers, einer Absenkeinrichtung zum schrittweisen Absenken des Warenträgers in Abstimmung mit einer Beladehöhe des Warenträgers vorgesehen, bei der eine Umreifungsvorrichtung zum Umreifen einer Ladegutschicht aus Ladegut auf dem Warenträger während des Kommissionierens vorgesehen ist.

Überraschenderweise lassen sich durch Vorsehen einer Umreifungsvorrichtung oberhalb, innerhalb oder unterhalb einer Kommissionierbühne Stapel aus Ladegut noch während des Kommissionierens sichern, so dass auch empfindliches Ladegut, beispielsweise Obst und Gemüse, welches nicht in Folie eingewickelt werden darf, problemlos kommissioniert und dabei gleichzeitig gegen Herabfallen von dem Warenträger gesichert werden kann. Die Umreifungsvorrichtung kann dabei oberhalb, innerhalb oder unterhalb einer Kommissionierbühne angeordnet sein. Vorteilhafterweise ist die Umreifungsvorrichtung im Bereich eines Kommissionierschachts angeordnet, der das Ladegut während des Kommissionierens gegen Verrutschen und Herabfallen von dem zu beladenden Warenträger sichert. Die Umreifungsvorrichtung kann zum horizontalen oder vertikalen Umreifen der Ladegutschicht vorgesehen sein.

In Weiterbildung der Erfindung ist die Umreifungsvorrichtung auf einer Oberseite einer Kommissionierbühne angeordnet, auf der ein Kommissionierer steht und/oder auf der ein Kommissionierroboter angeordnet ist.

Dadurch kann der Umreifungsvorgang unmittelbar erfolgen, nachdem eine vollständige Ladegutschicht auf den Warenträger aufgebracht wurde und der Warenträger dann etwa um die Höhe der Ladegutschicht abgesenkt wurde, so dass der Kommissionierer oder ein Kommissionierroboter eine weitere Ladegutschicht auflegen kann. Durch Anordnung der Umreifungsvorrichtung auf einer Oberseite der Kommissionierbühne kann die Ladegutschicht unmittelbar nach ihrer Vervollständigung und Absenkung gemeinsam mit dem Warenträger gegen Herabfallen und Verrutschen gesichert werden. Auf diese Weise kann mit hoher Geschwindigkeit sicher kommissioniert werden.

In Weiterbildung der Erfindung ist die Umreifungsvorrichtung ausgebildet und angeordnet, nach dem Aufbringen einer Ladegutschicht auf den Warenträger und dem nachfolgenden Absenken des Warenträgers die Ladegutschicht zu umreifen.

Dadurch kann die Ladegutschicht unmittelbar nach dem Absenken des Warenträgers und noch vor dem Aufbringen einer weiteren Ladegutschicht umreift werden. Dadurch wird zuverlässig verhindert, dass der Kommissionierer oder ein Kommissionierroboter durch das Aufbringen von Ladegut einer weiteren Ladegutschicht das Ladegut der bereits vollständigen Ladegutschicht verschiebt oder gar von dem Warenträger herunterschiebt.

In Weiterbildung der Erfindung ist die Umreifungsvorrichtung zum horizontalen Umreifen der Ladegutschicht aus Ladegut ausgebildet und angeordnet.

Besonders kritisch ist das seitliche Herunterfallen von Ladegut von dem Warenträger. Dies wird zum einen während des Kommissionierens durch die Wand des Kommissionierschachts verhindert. Gegen das seitliche Herunterfallen oder Verrutschen von dem Warenträger sichert dann auch die Umreifung der Ladegutschicht.

Gemäß der Erfindung ist auch ein Verfahren zum Kommissionieren auf Warenträgern, insbesondere Paletten, mit einer erfindungsgemäßen Vorrichtung mit den Schritten Zuführen eines Warenträgers zu einem Kommissionierplatz, schrittweises Absenken des Warenträgers während des Kommissionierens in Abstimmung mit einer Beladehöhe des Warenträgers und Abführen des vollständig beladenen Warenträgers vorgesehen, bei dem das Umreifen einer Ladegutschicht auf dem Warenträger während des Kommissionierens vorgesehen ist.

Das Umreifen einer Ladegutschicht auf dem Warenträger während des Kommissionierens ermöglicht es, auch empfindliches Ladegut, beispielsweise Obst oder Gemüse, problemlos zu kommissionieren und dennoch zuverlässig gegen Herabfallen von dem Warenträger oder Verrutschen auf dem Warenträger zu sichern.

In Weiterbildung der Erfindung ist das Umreifen jeder Ladegutschicht nach dem Absenken um eine Höhe vorgesehen, die etwa der Höhe der Ladegutschicht entspricht.

Auf diese Weise kann unmittelbar nach dem Fertigstellen einer Ladegutschicht und der Absenkung des Warenträgers, um eine weitere Ladegutschicht aufzusetzen, die bereits fertiggestellte Ladegutschicht umreift werden. Vorteilhafterweise geschieht das Umreifen noch vor dem Aufsetzen des ersten Ladeguts der weiteren Ladegutschicht. Unabhängig davon kann dann, wenn die fertiggestellte Ladegutschicht unmittelbar nach dem Absenken umreift wird, ein Verrutschen oder Herabfallen von Ladegut aus der fertiggestellten Ladegutschicht vom Warenträger zuverlässig verhindert werden.

In Weiterbildung der Erfindung ist das horizontale Umreifen der Ladegutschicht vorgesehen.

Dadurch wird speziell das seitliche Herabfallen von Ladegut oder auch das seitliche Verrutschen von Ladegut auf dem Warenträger verhindert.

In Weiterbildung der Erfindung erfolgt das Anordnen eines Kantenschutzes an der Ladegutschicht vor dem Umreifen.

Bei Vorsehen eines Kantenschutzes kann das Umreifungsband, das beispielsweise als Kunststoffband ausgebildet ist, vergleichsweise stark gespannt werden, ohne das Ladegut zu beschädigen.

Weitere Merkmale und Vorteile der Erfindung ergeben sich aus der nachfolgenden Beschreibung einer bevorzugten Ausführungsform der Erfindung im Zusammenhang mit der Zeichnung. In der Zeichnung zeigt:

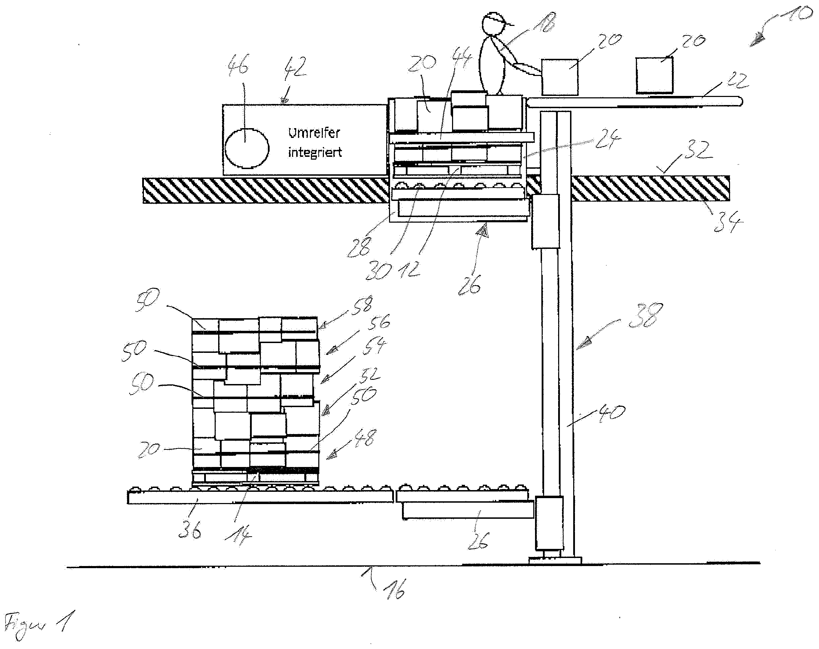

Fig. 1 eine schematische Darstellung einer erfindungsgemäßen Vorrichtung zum Kommissionieren.

Die in Fig. 1 dargestellte Vorrichtung zum Kommissionieren 10 ist zum Kommissionieren auf Paletten 12, 14 ausgebildet. Anstelle der Paletten 12, 14 können auch anders geformte Warenträger eingesetzt werden. Die Vorrichtung 10 ist auf einer Grundfläche 16, beispielsweise einem Hallenboden, angeordnet. Ein Kommissionierer 18 übernimmt Ladegut 20 von einem Förderband 22 und setzt das Ladegut 20 dann auf die erste Palette 12. Die erste Palette 12 ist dabei innerhalb eines Kommissionierschachts 24 angeordnet. Die Wände des Kommissionierschachts 24, beispielsweise vier Wände eines im Querschnitt rechteckigen Kommissionierschachts oder auch nur eine, zwei oder drei Begrenzungswände des Kommissionierschachts 24, bieten dem Kommissionierer 18 beim Beladen der Palette 12 einen Anschlag und verhindern auch, dass das Ladegut 20 während des Kommissionierens von der Palette 12 herunterfällt. Die erste Palette 12 wird während des Beladens, das in Fig. 1 gezeigt ist, mittels einer Haltevorrichtung 26 in dem Kommissionierschacht 24 fixiert. Die Haltevorrichtung 26 kann hierzu beispielsweise eine Plattform 28 aufweisen, die auch mit Transportrollen 30 versehen sein kann, um die Palette 24 abzustützen und gegen Herausfallen nach unten aus dem Kommissionierschacht 24 zu sichern. In der schematischen Darstellung der Fig. 1 ist zwischen den Rollen auf der Oberseite der Haltevorrichtung 26 und der Unterseite der Palette 12 ein Zwischenraum dargestellt. Tatsächlich sitzt die Palette 12 auf den Rollen 30 auf.

Anstelle des Kommissionierers 18 kann auch ein Kommissionierroboter eingesetzt werden, um das Ladegut 20 auf die Palette 12 zu kommissionieren.

Der Kommissionierer 18 steht auf einer Standfläche 32, die auf der Oberseite einer Kommissionierbühne 34 angeordnet ist. Im Zwischenraum zwischen der Kommissionierbühne 30 und der Grundfläche 16 ist ein nicht dargestelltes Förderband zum Zuführen von unbeladenen Paletten sowie auch ein Förderband oder Rollenband 36 zum Abführen von vollständig beladenen Paletten 14 vorgesehen. Zwischen dem Förderband zum Zuführen von unbeladenen Paletten und dem Kommissionierschacht 24 werden die Paletten mittels einer Hub- und Absenkeinrichtung 38 bewegt. Die Hub- und Absenkeinrichtung 38 ist beispielsweise als Teleskopheber ausgebildet und weist bei der dargestellten Ausführungsform zwei Haltevorrichtungen 26 auf, die entlang eines Masts 40 angehoben und abgesenkt werden können.

Auf der Standfläche 32 ist oberhalb der Kommissionierbühne 34 eine Umreifungsvorrichtung 42 angeordnet. Die Umreifungsvorrichtung 42 weist einen Rahmenabschnitt 44 auf, der den Kommissionierschacht 24 umgibt. Weiter weist die Umreifungsvorrichtung 42 eine Vorratsrolle 46 für Umreifungsband auf, beispielsweise Kunststoffband. Zum Umreifen wird mittels eines Schlittens oder dergleichen ein Ende des Umreifungsbands entlang dem Rahmen 44 um einen Ladegutstapel aus Ladegut 20 auf der Palette 12 herumgeführt, dann gespannt, abgeschnitten und die beiden Enden des Umreifungsbands, das dann um den Ladegutstapel herumgespannt ist, werden miteinander verbunden, beispielsweise miteinander verschweißt. Dadurch ist jede Ladegutschicht aus Ladegut gegen seitliches Verrutschen und Herunterfallen gesichert. Dies ist gut anhand der vollständig beladenen Palette 14 in Fig. 1 zu erkennen. Die erste Ladegutschicht 48, die aus insgesamt vier Ladegutstücken 20 besteht, liegt unmittelbar auf einer Oberseite der Palette 14 auf und ist mittels eines Umreifungsbands 50 gesichert. Die daraufliegende zweite Ladegutschicht 52 ist dahingegen nicht mit einem Umreifungsband gesichert. Je nach Größe des Ladeguts sowie dessen Beschaffenheit kann jede Ladegutschicht oder auch nur ein Teil der Ladegutschichten mit einem Umreifungsband 50 gesichert werden.

Eine dritte Ladegutschicht 54 ist wieder mit einem Umreifungsband 50 gesichert, wie auch eine vierte Ladegutschicht 56 und eine fünfte Ladegutschicht 58. Der Ladegutstapel auf der vollständig beladenen Palette 14 ist dadurch gegen seitliches Verrutschen und Herabfallen einzelner Ladegutstücke gesichert und die vollständig beladene Palette 14 kann dadurch auch mit hoher Geschwindigkeit über das Förderband 36 abtransportiert werden.

Die Wand des Kommissionierschachts 24, eine umlaufende Wand, ist an der Stelle des Rahmens 44 des Umreifers 42 unterbrochen, durch einen horizontalen Schlitz. Die Wand des Kommissionierschachts 24 kann auch oberhalb des Rahmens 44 des Umreifers enden.

Beim Kommissionieren von Ladegut 20 auf Paletten 12, 14 nimmt der Kommissionierer 18 oder ein Kommissionierroboter Ladegut 20 von dem Förderband 22 und setzt es auf die Oberseite der Palette 12 oder auf die Oberseite eines bereits auf der Palette 12 vorhandenen Ladegutstapels. Sobald eine Ladegutschicht vervollständigt ist, wird die Palette 12 mittels der Hub- und Absenkvorrichtung 38 abgesenkt. Das Absenken erfolgt dabei um eine Strecke, die im Bereich der Höhe des Ladegutstapels liegt, so dass der Kommissionierer 18 die folgende Ladegutschicht wieder etwa auf Höhe des Obertrums des Förderbands 22 auflegen kann. Nachdem die Palette 12 etwa um die Höhe der Ladegutschicht abgesenkt wurde, wird mittels des Umreifers 42 ein Umreifungsband 50 um den Außenumfang der Ladegutschicht gelegt. Gegebenenfalls kann ein Kantenschutz an den vier Ecken der Ladegutschicht zuvor aufgesetzt werden. Nach dem Umreifen ist das Ladegut 20 der umreiften Ladegutschicht gegen seitliches Verrutschen und seitliches Herunterfallen von der Palette 12 gesichert.

Sobald dann der Kommissionierer 18 auf der bereits umreiften Ladegutschicht eine weitere Ladegutschicht vervollständigt hat, wird die Palette 12 wieder etwa um die Höhe einer Ladegutschicht mittels der Hub- und Absenkvorrichtung 38 abgesenkt und die gerade fertiggestellte Ladegutschicht wird wieder umreift.

Nachdem die Palette 12 vollständig beladen wurde und alle oder einzelne Ladegutschichten mit einem Umreifungsband 50 umreift wurden, wird die vollständig beladene Palette 12 mittels der Hub- und Absenkvorrichtung 38 nach unten aus dem Kommissionierschacht 24 herausgefahren, auf das Förderband 36 abgesetzt und abtransportiert. Bereits während des Absenkens kann eine weitere, nicht beladene Palette von unten her in den Kommissionierschacht 24 eingefahren werden, so dass der Kommissionierer 18 weiter kommissionieren kann.

## Patentansprüche

1. Vorrichtung zum Kommissionieren auf Warenträgern, insbesondere Paletten (12, 14), mit einem Kommissionierschacht (24), einer Zuführreinrichtung zum Zuführen eines nicht beladenen Warenträgers, einer Absenkeinrichtung (38) zum schrittweisen Absenken des Warenträgers in Abstimmung mit einer Beladehöhe des Warenträgers und mit einer Umreifungsvorrichtung (42) zum Umreifen einer Ladegutschicht aus Ladegut (20) auf dem Warenträger während des Kommissionierens, **dadurch gekennzeichnet, dass** die Wand des Kommissionierschachts (24) eine umlaufende Wand ist und an der Stelle des Rahmens (44) des Umreifers (42) durch einen horizontalen Schlitz unterbrochen ist.

2. Vorrichtung nach Anspruch 1, **dadurch gekennzeichnet, dass** die Umreifungsvorrichtung (42) auf einer Oberseite einer Kommissionierbühne (34) angeordnet ist, auf der ein Kommissionierer (18) steht und/oder auf der ein Kommissionierroboter angeordnet ist.

3. Vorrichtung nach einem der vorstehenden Ansprüche, **dadurch gekennzeichnet, dass** die Umreifungsvorrichtung (42) ausgebildet und angeordnet ist, nach dem Aufbringen einer Ladegutschicht auf dem Warenträger und dem nachfolgenden Absenken des Warenträgers die Ladegutschicht zu umreifen.

4. Vorrichtung nach einem der vorstehenden Ansprüche, **dadurch gekennzeichnet**, das die Umreifungsvorrichtung (42) zum horizontalen Umreifen der Ladegutschicht aus Ladegut ausgebildet und angeordnet ist.

5. Verfahren zum Kommissionieren auf Warenträgern, insbesondere Paletten (12, 14), mit einer Vorrichtung nach einem der vorstehenden Ansprüche, mit den Schritten Zuführen eines Warenträgers zu einem Kommissionierplatz, Schrittweises Absenken des Warenträgers während des Kommissionierens in Abstimmung mit einer Beladehöhe des Warenträgers und Abführen des vollständig beladenen Warenträgers, **gekennzeichnet durch** Umreifen einer Ladegutschicht auf dem Warenträger während des Kommissionierens.

6. Verfahren nach Anspruch 5, **gekennzeichnet durch** Umreifen jeder Ladegutschicht nach dem Absenken um eine Höhe, die etwa der Höhe der Ladegutschicht entspricht.

7. Verfahren nach Anspruch 5 oder 6, **gekennzeichnet durch** horizontales Umreifen der Ladegutschicht.

8. Verfahren nach einem der Ansprüche 5 bis 7, **gekennzeichnet durch** Anordnen eines Kantenschutzes an der Ladegutschicht vor dem Umreifen.

## Claims

1. Apparatus for commissioning on goods carriers, in particular pallets (12, 14), having a commissioning shaft (24), a feed device for feeding an unladen goods carrier, a lowering device (38) for incrementally lowering the goods carrier in accordance with a loading height of the goods carrier, and having a strapping apparatus (42) for strapping a load-goods layer made up of load goods (20) on the goods carrier during commissioning, **characterized in that** the wall of the commissioning shaft (24) is a peripheral wall and is interrupted by a horizontal slot at the point of the frame (44) of the strapper (42).

2. Apparatus according to Claim 1, **characterized in that** the strapping apparatus (42) is arranged on a top side of a commissioning stage (34) on which a commissioner (18) stands and/or on which a commissioning robot is arranged.

3. Apparatus according to either of the preceding claims, **characterized in that** the strapping apparatus (42) is configured and arranged, after a load-goods layer has been placed on the goods carrier and the goods carrier has subsequently been lowered, to strap the load-goods layer.

4. Apparatus according to one of the preceding claims, **characterized in that** the strapping apparatus (42) is configured and arranged to horizontally strap the load-goods layer made up of load goods.

5. Method for commissioning on goods carriers, in particular pallets (13, 14), using an apparatus according to one of the preceding claims, having the steps of feeding a goods carrier to a commissioning position, incrementally lowering the goods carrier during commissioning in accordance with a loading height of the goods carrier, and discharging the fully laden goods carrier, **characterized by** strapping of a load-goods layer on the goods carrier during commissioning.

6. Method according to Claim 5, **characterized by** strapping of each load-goods layer after lowering by a height that corresponds approximately to the height of the load-goods layer.

7. Method according to Claim 5 or 6, **characterized by** horizontal strapping of the load-goods layer.

8. Method according to one of Claims 5 to 7, **characterized by** arranging an edge protector on the load-goods layer before strapping.

## Revendications

1. Dispositif permettant de préparer des commandes sur des supports de marchandises, en particulier des palettes (12, 14), comprenant une cage de préparation de commandes (24), un dispositif d'amenée pour amener un support de marchandises non chargé, un dispositif d'abaissement (38) pour abaisser progressivement le support de marchandises selon une hauteur de chargement du support de marchandises, et un dispositif de cerclage (42) pour cercler une couche de marchandises chargées composée de marchandises chargées (20) sur le support de marchandises pendant la préparation de commandes,
**caractérisé en ce que** la paroi de la cage de préparation de commandes (24) est une paroi périphérique, et est interrompue par une fente horizontale à l'emplacement du cadre (44) de la cercleuse (42).

2. Dispositif selon la revendication 1, **caractérisé en ce que** le dispositif de cerclage (42) est disposé sur une face supérieure d'une plateforme de préparation de commandes (34) sur laquelle se tient un préparateur de commandes (18) et/ou sur laquelle est disposé un robot de préparation de commandes.

3. Dispositif selon l'une quelconque des revendications précédentes, **caractérisé en ce que** le dispositif de cerclage (42) est réalisé et disposé pour cercler la couche de marchandises chargées après la mise en place d'une couche de marchandises chargées sur le support de marchandises et l'abaissement consécutif du support de marchandises.

4. Dispositif selon l'une quelconque des revendications précédentes, **caractérisé en ce que** le dispositif de cerclage (42) est réalisé et disposé pour le cerclage horizontal de la couche de marchandises chargées composée de marchandises chargées.

5. Procédé permettant de préparer des commandes sur des supports de marchandises, en particulier des palettes (12, 14) à l'aide d'un dispositif selon l'une quelconque des revendications précédentes, comprenant les étapes consistant à amener un support de marchandises à un poste de préparation de commandes, à abaisser progressivement le support de marchandises pendant la préparation de commandes selon une hauteur de chargement du support de marchandises, et à évacuer le support de marchandises entièrement chargé, **caractérisé par** le cerclage d'une couche de marchandises chargées sur le support de marchandises pendant la préparation de commandes.

6. Procédé selon la revendication 5, **caractérisé par** le cerclage de chaque couche de marchandises chargées après l'abaissement d'une hauteur qui correspond approximativement à la hauteur de la couche de marchandises chargées.

7. Procédé selon la revendication 5 ou 6, **caractérisé par** le cerclage horizontal de la couche de marchandises chargées.

8. Procédé selon l'une quelconque des revendications 5 à 7, **caractérisé par** l'agencement d'un protège-arête sur la couche de marchandises chargées avant le cerclage.
